# EUROPEAN PATENT APPLICATION

(11) **EP 4 009 269 A1**
(43) Date of publication of application: **08.06.2022**
(21) Application number: 21169563.0
(22) Date of filing: 21.04.2021
(51) Int. Cl.: G06T 5/00, G06T 7/10, G06N 3/04, G06N 3/08

(54) **CNN-BASED IMAGE PROCESSING**

(30) Priority: 04.12.2020 US 202063121284 P
(71) Applicant: Koninklijke Philips N.V., 5656 AG Eindhoven (NL)
(72) Inventor: WUELKER, Christian, 5656 AE Eindhoven (NL); SCHNELLBÄCHER, Nikolas David, 5656 AE Eindhoven (NL); BERGNER, Frank, 5656 AE Eindhoven (NL); BROWN, Kevin Martin, 5656 AE Eindhoven (NL); GRASS, MIchael, 5656 AE Eindhoven (NL)
(74) Representative: Philips Intellectual Property & Standards

(57) **Abstract**

Proposed are concepts for processing an image with a convolutional neural network, CNN. Such concepts include using an additional set of input channels to a CNN to provide supplementary information that is available in the image domain. Such supplementary information can be used to improve the CNN performance.

## Description

### FIELD OF THE INVENTION

The present invention is generally related to image processing and, more particularly, to processing an image with a convolutional neural network, CNN

### BACKGROUND OF THE INVENTION

The structure of an artificial neural network (or, simply, neural network) is inspired by the human brain. Neural networks comprise multiple layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). CNNs have proved to be particularly successful at analyzing images, and are able to classify images with a much lower error rate than other types of neural network. In particular, feature extraction through convolution inherently is locally coherent, and local spatial coherence is often desirable in image processing. Moreover, in CNNs, only a pre-defined number of convolution kernels needs to be learnt during network training, and since such kernels are in general much smaller than the input image, the number of trainable parameters is relatively small in comparison with the amount of image data to be processed. CNNs are therefore particularly suited to performing various tasks in medical image processing, such as image de-noising, segmentation, or classification.

CNNs typically contain several layers, including a convolutional layer, a pooling layer, a fully connected layer and a softmax layer. The convolutional layer consists of a set of learnable filters and extracts features from the input. The pooling layer is typically a form of non-linear down-sampling, reducing the data size by combining the outputs of a plurality of neurons in one layer into a single neuron in the next layer. The fully connected layer connects each neuron in one layer to all the neurons in the next layer. The softmax layer determines a probability distribution for each output.

Methods of training a machine-learning algorithm are well known. Typically, such methods comprise obtaining a training dataset, comprising training input data entries and corresponding training output data entries. An initialized machine-learning algorithm is applied to the input data to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

There is a tendency in machine learning towards applying deep neural networks in extreme situations. For example, in computed tomography (CT) de-noising, the aim is to generate high-quality images from only a fraction of the dose typically used in clinical CT, e.g. 10%-25%, according to the 'as low (dose) as reasonably achievably (ALARA)' principle. Another example is in fast MRI, where the aim is to reconstruct images from data that are four times (4x) or even eight times (8x) under-sampled in k-space.

However, there are situations where data is so limited that processing images is difficult and/or restricted. For example, this problem commonly exists for molecular imaging techniques such as PET or single-photon emission computed tomography (SPECT), where the measured photon counting statistics are inherently of such low quality that analyzing images provides poor/low-quality results.

### SUMMARY OF THE INVENTION

The invention is defined by the claims.

According to examples in accordance with an aspect of the invention, there is provided a computer-implemented method of processing an image with a convolutional neural network, CNN, the computer-implemented method comprising:
providing the image to a first set of input channels of the CNN;
providing supplementary information presented in the image domain to a second set of input channels of the CNN, wherein the second set of input channels does not contain any of the channel(s) of the first set of input channels, and wherein the supplementary information relates to one or more characteristics of the creation of the image; and
obtaining a processing result from the CNN based on the image and supplementary information.

There is proposed a concept of using an additional set of input channels to a CNN to provide supplementary information that is available from the image domain. Such supplementary information can be used to improve the CNN performance.

For example, the supplementary information may comprise a coarse estimate of noise to be removed from an image, or the noise variance. Using this additional information, improved denoising performance may be obtained by the CNN

One particular area for which the proposed concepts may be beneficial is medical image processing. For many medical image processing tasks, there is additional information available in the image domain, and it is proposed that this information may be leveraged to improve the performance of CNNs.

For example, in positron emission tomography (PET), a map of the photon attenuation within the patient's body can be generated from computed tomography (CT) typically performed in the same scan session, as well as the sensitivity profile of the PET scanner. According to proposed embodiments, this supplementary information may be used to provide improved lesion detection.

Proposals may also apply to single-photon emission computed tomography (SPECT), where as in PET the measured photon counting statistics are inherently of such low quality that including supplementary information (e.g. regarding photon attenuation in the patient's body) may assist image analysis and/or improve image quality.

A further example may relate to CNN-based CT image de-noising, where a coarse estimate of the noise to be removed from the image (or, alternatively, of the variance of the noise) can be obtained from alternating negation, a technique already described in European Patent Application Number EP17825127.8. Such supplementary information regarding noise (or its variance) may be used to improve CNN de-noising performance.

Nonetheless, there are many other applications and situations within which supplementary information may be readily available and thus able to be leveraged according to proposed embodiments (e.g. to solve tasks and/or improve image processing results using a CNN).

According to some embodiments, the image may comprise a 3D image. The step of providing the image to the first set of input channels may then comprise providing one or more 2D image sections of the image to the first set of input channels of the CNN. For example, typical implementations may use a 2.5D CNN network architecture, wherein a plurality of neighboring 2D image slices from a 3D image are provided to the CNN via a respective plurality (i.e. first set) of input channels. The supplementary information may then be provided to the CNN via a respective plurality (i.e. second set) of additional input channels.

Embodiments may be used wherever CNNs are employed in image processing and supplementary information relevant to the task is available in the image domain. For example, the image may comprise a medical image of at least a portion of a subject. The supplementary information may then relate to one or more image capture characteristics of the subject or the image capture apparatus. For example, the supplementary information may be representative of at least one of: photon attenuation within the subject's body; a sensitivity profile of the image capture apparatus; a noise profile of the image; a noise profile of the image capture apparatus; a dose modulation map; a cone-beam artifact estimate; a metal artefact estimate; a beam hardening estimate; a ring artefact estimate; a map representing angular coverage; and geometrical information of one or more pixels in a coordinate system. Embodiments may therefore be of particular benefit in the field of medical image processing.

In some embodiments, the CNN may be trained using a training algorithm configured to receive one or more training inputs and known outputs, wherein the one or more training inputs comprise the supplementary information presented in the image domain, and wherein the known outputs comprise images. This may provide the advantage that supplementary information can be used in both neural network training and in inference (where the loss function used during neural network training is not used anymore).

Further, the CNN may comprise at least one of: a noise remover or estimator trained to reduce or estimate noise in an image; a segmenter trained to segment an image; a classifier trained to classify an image; and an artifact remover or estimator trained to reduce or remove or estimate artifacts in an image. In this way, a CNN may comprise one or more various functions that can be improved by making use of the supplementary information.

In some embodiments, obtaining a processing result from the CNN may comprise generating an output image according to one or more predictions based on the supplementary information presented in the image domain. Improved output images (e.g. in terms of reduced noise, artifacts, etc) may thus be provided by embodiments.

The CNN may use the supplementary information as additional input channels to the neural network, and wherein the capacity in the first network layers of the CNN may then be adapted according to the additional input channels.

According to another aspect, there is provided a computer program product for processing an image with a CNN, wherein the computer program product comprises a computer-readable storage medium having computer-readable program code embodied therewith, the computer-readable program code configured to perform all of the steps of a proposed embodiment.

Thus, there may also be provided a computer system comprising: a computer program product according to proposed embodiment; and one or more processors adapted to perform a method according to a proposed concept by execution of the computer-readable program code of said computer program product.

According to still another aspect of the invention, there is provided a processing system for processing an image with a convolutional neural network, CNN, the system comprising one or more processors configured to:
provide the image to a first set of input channels of the CNN;
provide supplementary information presented in the image domain to a second set of input channels of the CNN, wherein the second set of input channels does not contain any of the channel(s) of the first set of input channels, and wherein the supplementary information relates to one or more characteristics of the creation of the image; and
obtain a processing result from the CNN based on the image and supplementary information.

The system may be remotely located from a user device for image processing. In this way, a user (such as a medical professional) may have an appropriately arranged system that can supply supplementary information at a location remotely located from the system for processing an image with a CNN. Embodiments may therefore enable a user to dynamically update and/or modify supplementary information using a local system (which may, for example, comprise a portable display device, such as a laptop, tablet computer, mobile phone, PDA, etc.). By way of example, embodiments may provide an application for a mobile computing device, and the application may be executed and/or controlled by a user of the mobile computing device.

The system may further include: a server device for processing an image with a CNN; and a client device comprising a user-interface. Dedicated data processing means may therefore be employed for processing an image with a CNN, thus reducing processing requirements or capabilities of other components or devices of the system.

The system may further include a client device, wherein the client device comprises the one or more processors. In other words, a user (such as analyst, doctor or medical professional) may have an appropriately arranged client device (such as a laptop, tablet computer, mobile phone, PDA, etc.) which processes received data in order to process an image with a CNN and generate a processing result. Purely by way of example, embodiments may therefore provide an image processing system that enables processing of one or more images with a CNN from a single location, wherein real-time communication between image acquisition apparatus and a user is provided and can have its functionality extended or modified according to proposed concepts, for example.

It will be understood that processing capabilities may therefore be distributed throughout the system in different ways according to predetermined constraints and/or availability of processing resources.

These and other aspects of the invention will be apparent from and elucidated with reference to the embodiments) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a computer-implemented method of processing a medical image with a CNN according to an embodiment of the invention;
Figure 2 illustrates a CNN-based CT image de-noising system comprising a processing system according to an embodiment of the invention;
Figure 3 illustrates improved CNN performance in low-dose CT de-noising with a coarse noise estimate as supplementary information according to a proposed embodiment; and
Figure 4 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes the provision of supplementary information (available in the image domain) to an additional set of input channels of a CNN. Such provision of supplementary information can be used to improve the CNN performance.

Reference to the image domain is to the domain in which the arrangement and relationship among different gray level intensities (or pixel color values) are expressed. Spatial domain is the commonly used domain for representing the digital images. Images represented in the spatial domain are easy for the human perception and understanding unlike the representation in other domains. Other domains in which images are generally represented are: the frequency domain; and the time-frequency (wavelet) domain.

CNNs have a certain number of input channels where the input data (images) enter the neural network. In the most basic image-processing CNN setup, there is only one input channel for input images. Although supplementary information available in the image domain can be used in neural network training (e.g. by modification of the loss function), the invention proposes that the CNN be informed with supplementary information in the image domain via one or more additional input channels to the CNN

Thus, it is proposed that supplementary information may be used not only in neural network training but also in inference, where the loss function used during neural network training is not used anymore. During training, embodiments may inform a CNN with supplementary information in the image domain via one or more additional input channels to the CNN (so as to learn how to use the supplementary information to better perform a task). Put another way, the CNN 'sees' both the input image and the supplementary information 'side-by-side'). Later in inference (e.g. image processing), supplementary information is fed to the neural network via the one or more additional input channels. Based on its learning, and the supplementary information, the CNN may provide improved processing results.

Proposed embodiments may, for example, be used wherever CNNs are employed in image processing and supplementary information relevant to the task is available in the image domain. CNN-based algorithms have proved to be particularly successful at analyzing images, and are able to classify images with a much lower error rate than other types of neural network. The field of medical image processing using CNNs may thus employ the proposed concept(s).

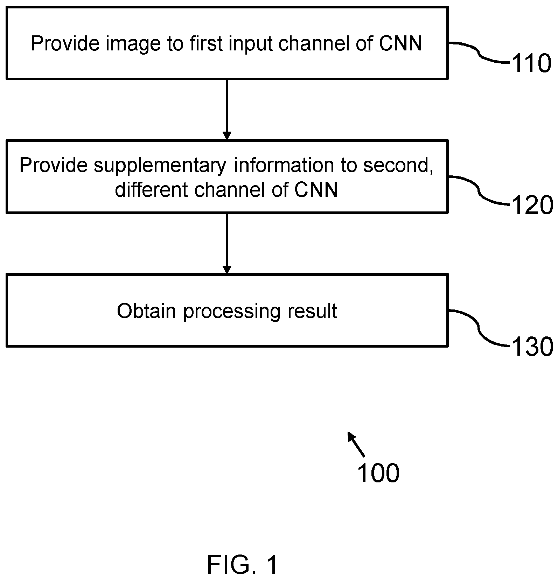

Figure 1 illustrates a computer-implemented method 100 of processing a medical image with a CNN according to an embodiment of the invention.

In this example, the CNN is trained to perform the function of a noise estimator to estimate noise in a low-dose CT image so that the noise may be subsequently reduced or removed. Put another way, the CNN is trained to identify noise in a medical (CT) image. Its output is therefore a processed version of the input low-dose CT image wherein noise has been identified for reduction or removal.

The CNN is trained using a training algorithm configured to receive one or more training inputs and known outputs. The training inputs comprise supplementary information presented in the image domain, and wherein the known outputs comprise images. In this example, the training input data entries for the CNN used in method 100 correspond to images containing noise and noise profiles of the same images. The training output data corresponds to noise-reduced versions of the input images.

The plurality of CNN-based learning algorithms may be produced by modifying existing CNN-based learning algorithms, such as VGG, Inception and ResNet.

Also, several pre-processing methods may be employed to improve the training samples. For example, images from the same laboratory and the same digital pathology system may be normalized in display features such as gamma correction.

The method 100 begins with step 110, in which a noisy low-dose CT image is provided to a first input channel of the CNN

At step 120, supplementary information presented in the image domain is provided to a second, different input channel of the CNN. Here, the supplementary information comprise an estimate of the variance of the noise in the noisy low-dose CT image (e.g. available from an alternating-negation technique described in European Patent Application Number EP17825127.8).

Finally, at step 130, a processing result is obtained from the CNN based on the image and supplementary information. Here, the result from the CNN comprises a predicted output image in which noise is reduced or removed.

It will be understood from the above-described exemplary embodiment that, as opposed to modifying the loss function of a CNN during training, the proposed approach of employing supplementary information may be used both in training and inference.

Although steps 110 and 120 are described as being undertaken one after the other, in other embodiments, they may not be. For example, steps 110 and 120 may be executed in parallel, or they may undertaken in the reverse order (i.e. step 120 before step 110).

Also, in the above-described exemplary embodiment, only a single image is provided to a first input channel and a corresponding noise image is provided to second, different input channel. However, in other embodiments, a plurality of images (e.g. 2D image sections of a 3D image) may be provided to a respective plurality of input channels (i.e. a first set of channels), and corresponding supplementary information in the image domain (e.g. a plurality of noise images) may be provided to a different input channel or channels (i.e. a second set of channels).

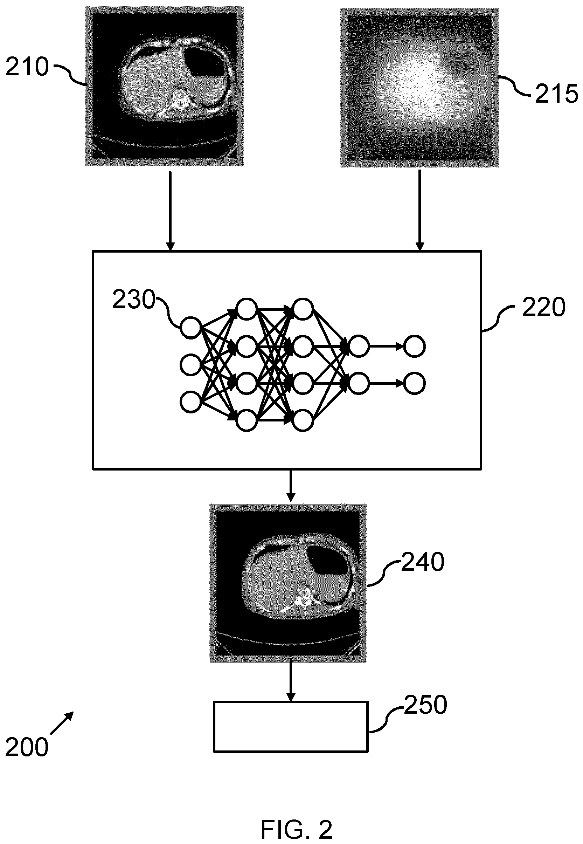

Figure 2 illustrates a CNN-based CT image de-noising system 200, comprising a processing system 220, according to an embodiment of the invention. The processing system 420 is, itself, an embodiment of the invention and employs a CNN 230 that is trained to reduce or remove noise from a low-dose CT image. Its output is therefore a processed version of an input low-dose CT image wherein noise has been reduced or removed.

A noisy low-dose CT image 210 is provided to a first input channel of the CNN 230.

Supplementary information 215 is provided to a second input channel of the CNN 230. Specifically, the supplementary information 215 is an estimate of the variance of the noise in the noisy low-dose CT image 210. The supplementary information therefore relates to an estimated noise characteristic of the low-dose CT image 210.

The processing system 220 obtains a processing result 240 from the CNN 230 based on the noisy low-dose CT image 210 and the supplementary information 215. Here, the processing result 240 comprises an output CT image 240 (that is equivalent to the noisy low-dose CT image 210 but with reduced or removed noise).

The system 200 further comprises a user interface 250 which is configured to output (e.g. display) the processing result 240 to a user.

In some embodiments, the user interface 250 may display additional information, such as the noisy low-dose CT image 210.

In some embodiments, the processing system 220 is further adapted to determine a confidence score for the processing result 240.

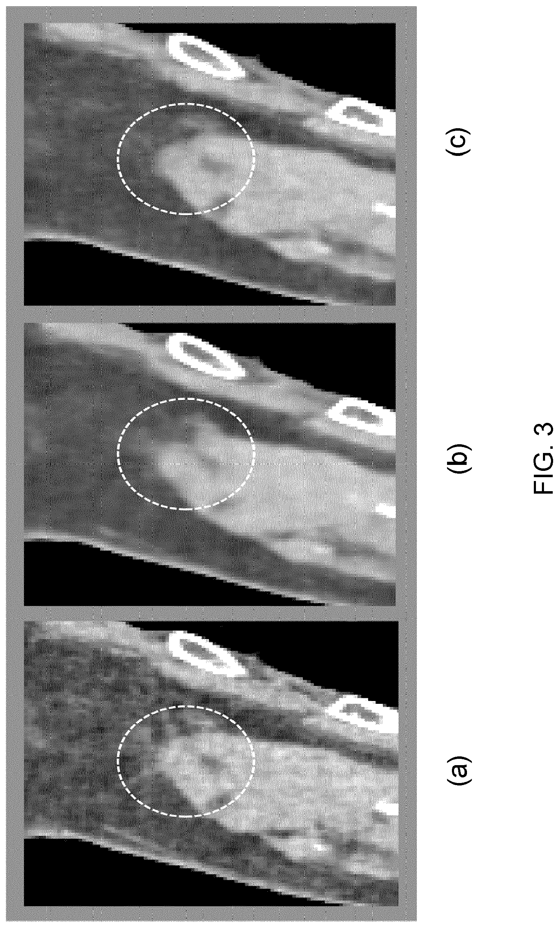

Figure 3 illustrates improved CNN performance in low-dose CT de-noising with a coarse noise estimate as supplementary information according to a proposed embodiment.

More specifically, Figure 3A shows a coronal CT image feature at full dose. Figure 3B shows the same coronal CT image feature, but at a small fraction (10%) of the dose and with conventional CNN-based image de-noising. Figure 3C show the same coronal CT image feature (at the same low dose level of Figure 3B) but with CNN image de-noising employing supplementary information (coarse noise estimate from alternating negation) according to a proposed embodiment. From a comparison of the images in Figures 3A-3C, it is clearly seen that informing the de-noising CNN with supplementary information via
an additional input channel to the CNN significantly improves image quality.

From the above description, it is to be understood that, according to proposed embodiments, supplementary information in the image domain can be used not only in CNN training but may also be used in inference. Specifically, during training, the CNN may be
informed with the supplementary information in the image domain via additional input channel(s), so as to learn how to use the supplementary information to provide improved predictions/estimations. Subsequently, in inference, when the CNN has learnt
how to utilize supplementary information, supplementary information provided to the CNN via the additional input channel(s) may be used to improve processing results (e.g. improved accuracy of predictions).

Embodiments may therefore be used wherever CNNs are employed in image processing and supplementary information relevant to the task is available in the image domain. It will therefore be understood that embodiments are not limited to noise removal, but may instead be used in relation to many different CNN-based image processing tasks (including, but not limited to: image classification; feature detection and/or classification; image segmentation; and artifact removal/suppression).

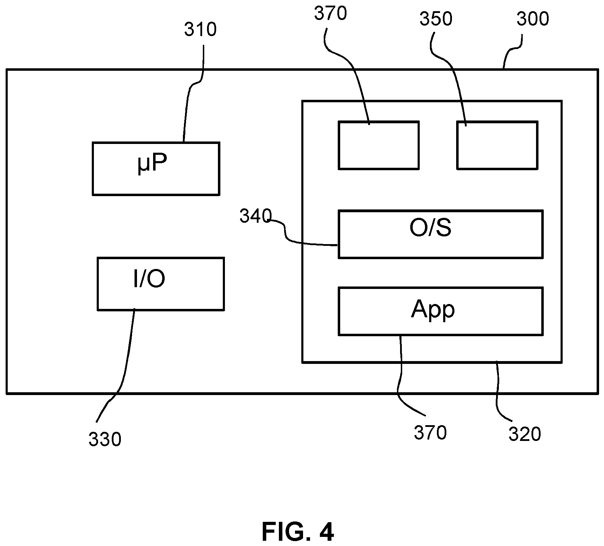

By way of further example, Figure 4 illustrates an example of a computer 300 within which one or more parts of an embodiment may be employed. Various operations discussed above may utilize the capabilities of the computer 300. For example, one or more parts of a system for processing an image with a CNN may be incorporated in any element, module, application, and/or component discussed herein. In this regard, it is to be understood that system functional blocks can run on a single computer or may be distributed over several computers and locations (e.g. connected via internet).

The computer 300 includes, but is not limited to, PCs, workstations, laptops, PDAs, palm devices, servers, storages, and the like. Generally, in terms of hardware architecture, the computer 300 may include one or more processors 310, memory 320, and one or more I/O devices 370 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 310 is a hardware device for executing software that can be stored in the memory 320. The processor 310 can be virtually any custom made or commercially available processor, a central processing unit (CPU), a Graphics Processing Unit (GPU), a digital signal processor (DSP), or an auxiliary processor among several processors associated with the computer 300, and the processor 310 may be a semiconductor based microprocessor (in the form of a microchip) or a microprocessor.

The memory 320 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 320 may incorporate electronic, magnetic, optical, and/or other types of storage media. Note that the memory 320 can have a distributed architecture, where various components are situated remote from one another, but can be accessed by the processor 310.

The software in the memory 320 may include one or more separate programs, each of which comprises an ordered listing of executable instructions for implementing logical functions. The software in the memory 320 includes a suitable operating system (OS) 350, compiler 340, source code 330, and one or more applications 360 in accordance with exemplary embodiments. As illustrated, the application 360 comprises numerous functional components for implementing the features and operations of the exemplary embodiments. The application 360 of the computer 300 may represent various applications, computational units, logic, functional units, processes, operations, virtual entities, and/or modules in accordance with exemplary embodiments, but the application 360 is not meant to be a limitation.

The operating system 350 controls the execution of other computer programs, and provides scheduling, input-output control, file and data management, memory management, and communication control and related services. It is contemplated by the inventors that the application 360 for implementing exemplary embodiments may be applicable on all commercially available operating systems.

Application 360 may be a source program, executable program (object code), script, or any other entity comprising a set of instructions to be performed. When a source program, then the program is usually translated via a compiler (such as the compiler 340), assembler, interpreter, or the like, which may or may not be included within the memory 320, so as to operate properly in connection with the OS 350. Furthermore, the application 360 can be written as an object oriented programming language, which has classes of data and methods, or a procedural programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 370 may include input devices such as, for example but not limited to, a mouse, keyboard, scanner, microphone, camera, etc. Furthermore, the I/O devices 370 may also include output devices, for example but not limited to a printer, display, etc. Finally, the I/O devices 370 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 370 also include components for communicating over various networks, such as the Internet or intranet.

If the computer 300 is a PC, workstation, intelligent device or the like, the software in the memory 320 may further include a basic input output system (BIOS) (omitted for simplicity). The BIOS is a set of essential software routines that initialize and test hardware at startup, start the O/S 350, and support the transfer of data among the hardware devices. The BIOS is stored in some type of read-only-memory, such as ROM, PROM, EPROM, EEPROM or the like, so that the BIOS can be executed when the computer 300 is activated.

When the computer 300 is in operation, the processor 310 is configured to execute software stored within the memory 320, to communicate data to and from the memory 320, and to generally control operations of the computer 300 pursuant to the software. The application 360 and the O/S 350 are read, in whole or in part, by the processor 310, perhaps buffered within the processor 310, and then executed.

When the application 360 is implemented in software it should be noted that the application 360 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 360 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

A single processor or other unit may fulfill the functions of several items recited in the claims.

It will be understood that the disclosed methods are computer-implemented methods. As such, there is also proposed a concept of a computer program comprising code means for implementing any described method when said program is run on a processing system.

The skilled person would be readily capable of developing a processor for carrying out any herein described method. Thus, each step of a flow chart may represent a different action performed by a processor, and may be performed by a respective module of the processing processor.

As discussed above, the system makes use of a processor to perform the data processing. The processor can be implemented in numerous ways, with software and/or hardware, to perform the various functions required. The processor typically employs one or more microprocessors that may be programmed using software (e.g. microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted that the term "adapted to" is intended to be equivalent to the term "configured to". Any reference signs in the claims should not be construed as limiting the scope.

## Claims

1. A computer-implemented method (100) of processing an image with a convolutional neural network, CNN, the computer-implemented method comprising:
providing (110) the image to a first set of input channels of the CNN;
providing (120) supplementary information presented in the image domain to a second set of input channels of the CNN, wherein the second set of input channels does not contain any of the channel(s) of the first set of input channels, and wherein the supplementary information relates to one or more characteristics of the creation of the image; and
obtaining (130) a processing result from the CNN based on the image and supplementary information.

2. The method of claim 1, wherein the image is a 3D image, and wherein providing the image to the first set of input channels comprises:
providing one or more 2D image sections of the image to the first set of input channels of the CNN

3. The method of claim 1 or 2, wherein the image comprises a medical image of at least a portion of a subject, and wherein the supplementary information relates to one or more image capture characteristics of the subject or the image capture apparatus.

4. The method of claim 3, wherein the supplementary information is representative of at least one of:
photon attenuation within the subject's body;
a sensitivity profile of the image capture apparatus;
a noise profile of the image;
a noise profile of the image capture apparatus;
a dose modulation map;
a cone-beam artifact estimate;
a metal artefact estimate;
a beam hardening estimate;
a ring artefact estimate;
a map representing angular coverage; and
geometrical information of one or more pixels in a coordinate system.

5. The method of any of claims 1 to 4, wherein the CNN is trained using a training algorithm configured to receive one or more training inputs and known outputs, wherein the one or more training inputs comprise the supplementary information presented in the image domain, and wherein the known outputs comprise images.

6. The method of any of claims 1 to 5, wherein the CNN comprises at least one of:
a noise remover or estimator trained to reduce or estimate noise in an image;
a segmenter trained to segment an image;
a classifier trained to classify an image; and
an artifact remover or estimator trained to reduce or remove or estimate artifacts in an image.

7. The method of any of claims 1 to 6, wherein obtaining a processing result from the CNN comprises generating an output image according to one or more predictions based on the supplementary information presented in the image domain.

8. The method of any of claims 1 to 7, wherein the CNN uses the supplementary information as additional input channels to the neural network, and wherein a capacity in first network layers of the CNN is adapted according to the additional input channels.

9. A computer program comprising computer program code means which is adapted, when said computer program is run on a computer, to implement the method of any of claims 1 to 8.

10. A processing system (220) for processing an image (210) with a CNN (230), the system comprising one or more processors configured to:
provide the image to a first set of input channels of the CNN;
provide supplementary information (215) presented in the image domain to a second set of input channels of the CNN, wherein the second set of input channels does not contain any of the channel(s) of the first set of input channels, and wherein the supplementary information relates to one or more characteristics of the creation of the image; and
obtain a processing result (240) from the CNN based on the image and supplementary information.

11. The processing system of claim 10, wherein the image is a 3D image, and wherein the one or more processors are further configured to provide one or more 2D image sections of the image to the first set of input channels of the CNN (230).

12. The processing system of claim 10 or 11, wherein the CNN (230) is trained using a training algorithm configured to receive one or more training inputs and known outputs, wherein the one or more training inputs comprise the supplementary information presented in the image domain, and wherein the known outputs comprise images.

13. The processing system of claim 10, 11 or 12, wherein the CNN (230) comprises at least one of:
a noise remover or estimator trained to reduce or estimate noise in an image;
a segmenter trained to segment an image;
a classifier trained to classify an image; and
an artifact remover or estimator trained to reduce or remove or estimate artifacts in an image.

14. The processing system of any of claims 10 to 13, wherein the supplementary information is representative of at least one of:
photon attenuation within the subject's body;
a sensitivity profile of the image capture apparatus;
a noise profile of the image;
a noise profile of the image capture apparatus;
a dose modulation map;
a cone-beam artifact estimate;
a metal artefact estimate;
a beam hardening estimate;
a ring artefact estimate;
a map representing angular coverage; and
geometrical information of one or more pixels in a coordinate system.

15. An image processing system comprising:
the processing system (220) of any of claims 10 to 14; and
a user interface (250) configured to receive, from the processing system, and display the processing result.
